# EUROPEAN PATENT SPECIFICATION

(11) **EP 2 036 784 B1**
(45) Date of publication and mention of the grant of the patent: **09.11.2011**
(21) Application number: 08015965.0
(22) Date of filing: 10.09.2008
(51) Int. Cl.: B60R 21/217, B60R 21/213, B60R 21/231

(54) **Airbag device and inflator**
Airbagvorrichtung und Generator
Dispositif d'airbag et gonfleur

(30) Priority: 14.09.2007 JP 2007239194; 12.05.2008 JP 2008125137
(43) Date of publication of application: 18.03.2009
(73) Proprietor: Toyoda Gosei Co., Ltd., Haruhi-cho, Nishikasugai-gun Aichi-ken 452-8564 (JP)
(72) Inventor: Iida, Takashi, Nishikasugai-gun Aichi-ken 452-8564 (JP); Yamanaka, Makoto, Nishikasugai-gun Aichi-ken 452-8564 (JP)
(74) Representative: Kramer - Barske - Schmidtchen

(56) References cited:
- EP-A- 1 386 791
- JP-A- 2004 182 172

## Description

The present invention relates to an airbag device including an inflator fixed to a roof of a vehicle and to an inflator used in the airbag device.

Japanese Laid-Open Patent Publication No. 2004-182172 describes an airbag device including an airbag accommodated in the roof of a vehicle in a folded state and an inflator for generating gas to inflate the airbag. In this device, the inflator is activated when impact is applied to the vehicle in a predetermined direction. The activated inflator generates gas that expands and deploys the airbag from an end of the roof.

In the airbag device, a bracket is attached to the inflator. The bracket is fastened to the roof from below by bolts to fix the inflator to the vehicle.

In the above-described airbag device, when fixing the inflator to the vehicle, the bolts must be fastened by female screws while positioning the bracket at the proper location on the roof. Such a task is difficult and lowers assembly efficiency.

A further airbag device including an airbag accommodated in the roof of a vehicle is known from EP 1 386 791 A2.

It is an object of the present invention to provide an airbag device that enables an inflator to be easily fixed to the roof of a vehicle and an inflator used in the airbag device.

A first aspect of the present invention is an inflator for use in an airbag device including an airbag adapted for being accommodated in a roof of a vehicle in a folded state. The roof includes a wall extending in a lateral direction and a longitudinal direction of the vehicle. The inflator is adapted for being fixed to the wall of the roof and for generating gas for inflation of the airbag. The inflator includes a bracket adapted for fixing the inflator to the roof. The bracket includes an arm extending in the longitudinal direction from the inflator and a hook arranged at an intermediate position in the longitudinal direction of the arm. The hook extends towards the wall of the roof and has a distal end extending towards a center of gravity in an assembly of the bracket and the inflator.

A second aspect of the present invention is an inflator for use in an airbag device including an airbag adapted for being accommodated in a roof of a vehicle in a folded state. The roof includes a wall extending in a lateral direction and a longitudinal direction of the vehicle. The inflator is adapted for being fixed to the wall of the roof and for generating gas for inflation of the airbag. The inflator includes a bracket adapted for fixing the inflator to the roof. The bracket includes an arm extending in the longitudinal direction from the inflator and a hook arranged at an intermediate position in the longitudinal direction of the arm. The hook extends towards the wall of the roof and has a distal end extending towards the inflator.

A third aspect of the present invention is an airbag device including an airbag adapted for being accommodated in a roof of a vehicle in a folded state, and an inflator according to the first or second aspect. The roof includes a wall extending in a lateral direction and longitudinal direction of the vehicle. The bracket is fixed from below to the wall of the roof. The wall of the roof includes an engagement portion which is engageable with the hook.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a side view showing a rear part of a vehicle to which an airbag device and inflator according to the present invention are installed;
Fig. 2 is a rear view showing the vehicle;
Fig. 3 is a cross-sectional view taken along line 3-3 in Fig. 2;
Fig. 4 is a side view showing a first embodiment of an inflator according to the present invention;
Fig. 5 is a plan view showing the inflator;
Fig. 6 is a bottom view showing the inflator;
Fig. 7 is a cross-sectional view showing the inflator during a process for fixing the inflator to a roof;
Fig. 8 is a side view showing a second embodiment of an inflator according to the present invention;
Fig. 9 is a plan view showing the inflator;
Fig. 10 is a bottom view showing the inflator;
Fig. 11 is a partial cross-sectional view showing a bracket and an inflator attached to the roof;
Fig. 12 is an enlarged partial cross-sectional view showing the portion of a bracket engaged with the roof; and
Fig. 13 is an enlarged partial cross-sectional view showing the portion of a bracket engaged with the roof in the prior art.

A first embodiment of an airbag device and inflator according to the present invention will now be discussed.

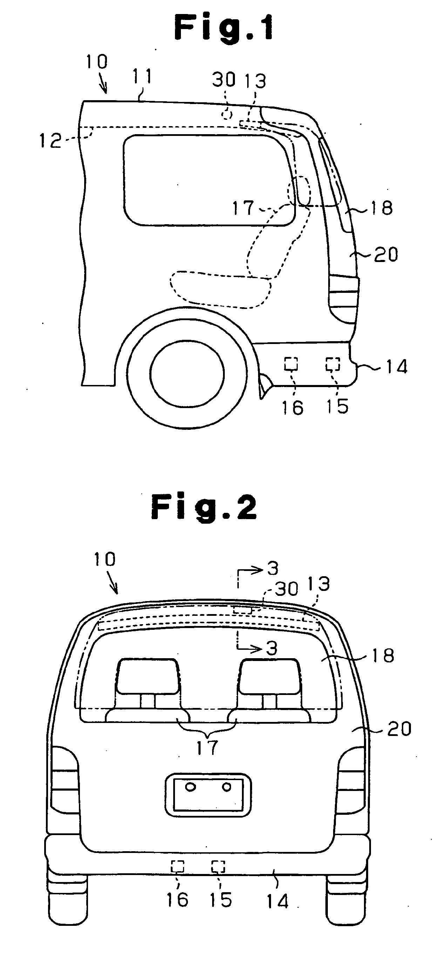

As shown in Figs. 1 and 2, a vehicle 10 has a rear part in which are arranged an airbag 13 and an inflator 30 for generating gas to inflate the airbag 13. The airbag 13 is accommodated in a folded state in a space formed between a roof panel 11, which serves as exterior equipment of the vehicle, and a roof head lining 12, which serves as interior equipment. The inflator 30 is also accommodated in the space formed between the roof panel 11 and roof head lining 12.

A sensor 15 is arranged on a bumper 14 mounted on the rear part of the vehicle 10. The sensor 15 outputs a signal when an impact greater than or equal to a predetermined value is applied to the rear part of the vehicle 10. The signal output from the sensor 15 is input to a controller 16. The controller 16 sends an activation signal to the inflator 30 based on the signal from the sensor 15. The inflator 30 generates gas in response to the activation signal from the controller 16. The gas generated from the inflator 30 is supplied to the interior of the airbag 13. This inflates and deploys the airbag 13 towards the rear of the vehicle 10. As shown with by the double-dashed line in Figs. 1 and 2, when inflated and deployed, the airbag 13 is positioned between a rear seat 17 and a rear window 18 of the vehicle 10. The airbag device of this embodiment is used to protect occupants from rear collisions.

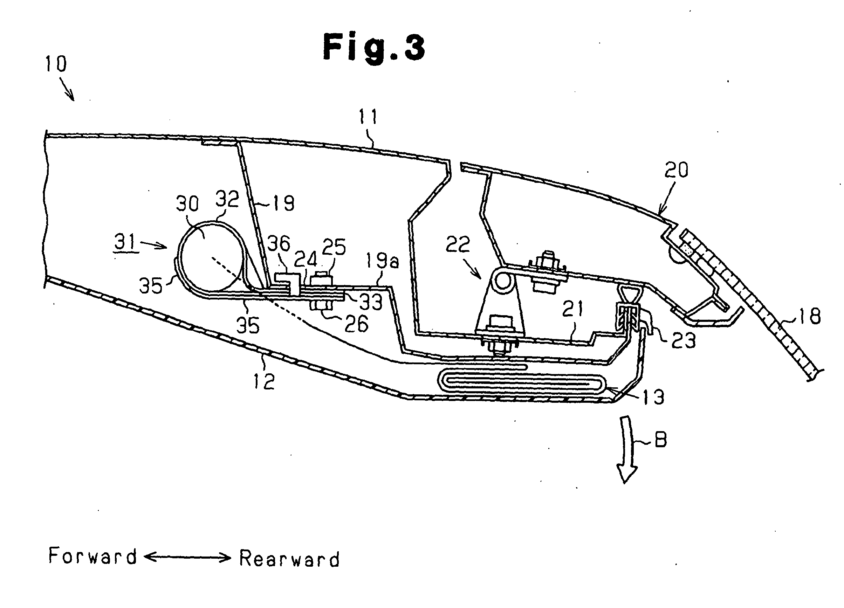

As shown in Fig. 3, the roof head lining 12 is attached to the lower side of the roof panel 11. The roof head lining 12 entirely covers the passenger compartment side of the roof panel 11. An inner panel 19 is arranged between the roof panel 11 and the roof head lining 12. The inner panel 19 is fixed to the roof panel 11. The roof panel 11 has a rear end bent towards the inner panel 19 and fixed to the rear end of the inner panel 19. The rear end of the roof panel 11 forms a rear roof rail 21 for supporting an upper end of a back door 20 of the vehicle 10. In this embodiment, the roof of the vehicle 10 is formed by the roof panel 11, the roof head lining 12, and the inner panel 19. The roof panel 11 and the inner panel 19 are both formed from a thin metal plate. The roof head lining 12 is formed from a flexible resin material.

The back door 20 is attached to the rear roof rail 21 by a hinge 22. The back door 20 is pivotal about the rear end of the roof panel 11. A rear window 18 is arranged in the back door 20.

The roof head lining 12 is downwardly pivotal about a position frontward from where the inner panel 19 is fixed to the roof panel 11. The rear end of the roof head lining 12 is engaged with a cover piece 23, which is fixed to the rear end of the rear roof rail 21, that is, the rear ends of the roof panel 11 and the inner panel 19. Inflation of the airbag 13 forces the roof head lining 12 downward and disengages the roof head lining 12 from the cover piece 23.

The folded airbag 13 and the inflator 30 are located below the inner panel 19. The airbag 13 and the inflator 30 are both fixed to the inner panel 19. The inflator 30 includes a gas injection port (not shown). The inflator 30 is fixed to the inner panel 19 with the gas injection port arranged in the airbag 13. The inner panel 19 has a wall 19a to which the inflator 30 is fixed. The wall 19a extends in the lateral direction and the longitudinal direction of the vehicle.

The airbag 13 is inflated and deployed in the following manner.

First, gas generated by the inflator 30 flows into the folded airbag 13. As the airbag 13 starts to inflate, the airbag 13 forces the roof head lining 12 downward. The roof head lining 12 pivots downward (direction of arrow B in Fig. 3) about a position frontward from the airbag 13. Then, the roof head lining 12 is disengaged from the cover piece 23. Thereafter, gas continues to flow into the airbag 13. As a result, the airbag 13 is deployed and inflated toward the rear from the rear end of the roof head lining 12.

A fastening structure for the inflator 30 will now be described in detail.

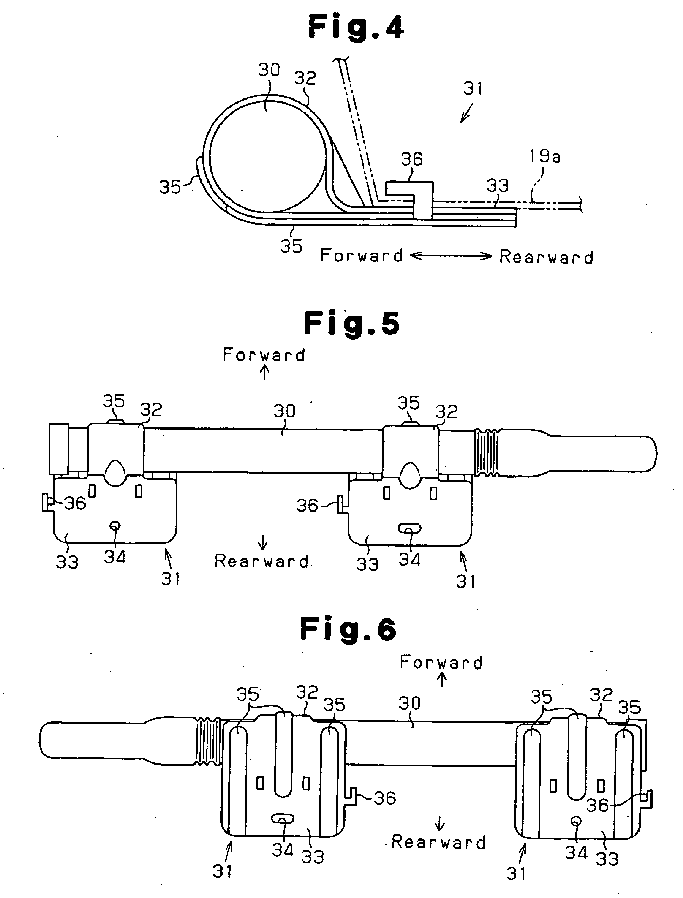

As shown in Figs. 4 to 6, the inflator 30 is generally cylindrical. Two brackets 31 are arranged on the inflator 30. The brackets 31 are spaced from each other by a predetermined distance in the axial direction of the inflator 30. As shown in Fig. 3, each bracket 31 is fixed to a lower surface of the wall 19a of the inner panel 19. This fastens the inflator 30 to the roof of the vehicle 10.

The inflator 30 is held in a holding portion 32 of each bracket 31. The holding portion 32 has a substantially C-shaped cross-section. Further, the holding portion 32 covers the circumferential surface of the inflator 30 and extends along the axial direction of the inflator 30.

Each bracket 31 includes an arm 33 extending rearwards from the inflator 30. The arm 33 has a generally planar base.

A hole 34 extends through each arm 33. The hole 34 is used to fix the inflator 30 to the roof with the bracket 31. Each arm 33 includes three projections 35 located on the side opposite to the wall 19a of the inner panel 19 shown in Fig.3. Each projection 35 linearly extends along a direction orthogonal to the axis of the inflator 30. One of the three projections 35 extends from the arm 33 to the holding portion 32. The projection 35 functions as a rib for reinforcing the arm 33.

A hook 36 is arranged at the middle of a side edge of each arm 33. The hook 36 is located between the rear end of the arm 33 that is spaced from the inflator 30 and the front end of the arm 33 that is proximal to the inflator 30. The hook 36 extends from the side edge of the arm 33 towards the wall 19a of the inner panel 19. Further, the hook 36 has a distal end bent towards the inflator 30.

As shown in Fig. 3, an engagement hole 24 is formed in the wall 19a of the inner panel 19 at a position corresponding to the hook 36 of each bracket 31. A female screw 25 is arranged on the wall 19a of the inner panel 19 at a position corresponding to the hole 34 of each bracket 31.

The operation of the airbag device and the inflator 30 will now be discussed.

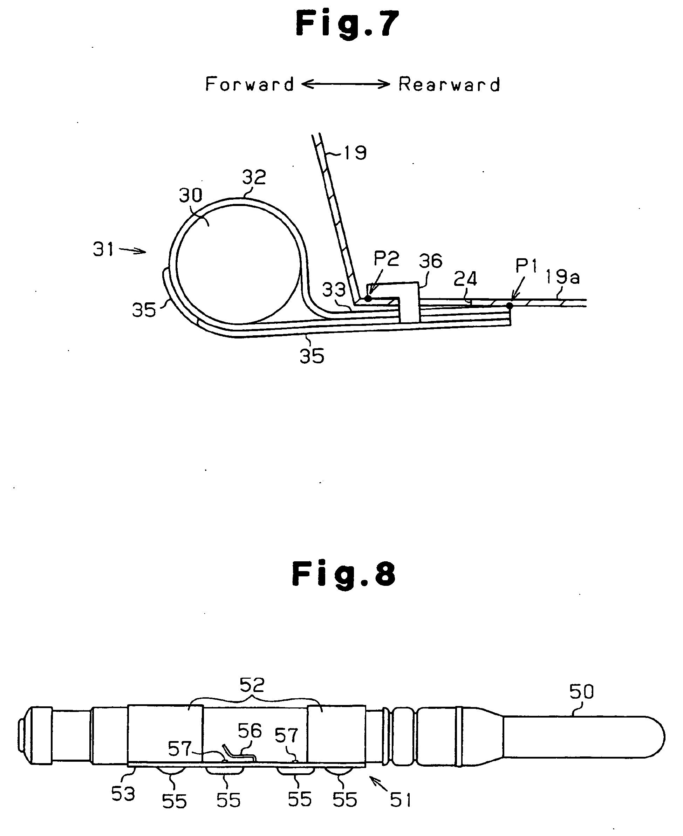

As shown in Fig. 7, the hook 36 of each bracket 31 is first engaged with the corresponding engagement hole 24 of the wall 19a to fix the inflator 30 to the roof. In this state, the holding portion 32 of the bracket 31 holding the inflator 30 is tilted downward. This is because the inflator 30 is much heavier than the bracket 31. The tilting of the inflator 30 in this manner presses a rear end P1 of the arm 33 against the lower surface of the wall 19a of the inner panel 19 and a distal end P2 of the hook 36 against the upper surface of the wall 19a of the inner panel 19. Thus, the bracket 31 and the inflator 30 are supported such that they are slightly tilted from a state in which they are fixed to the roof. That is, the rear end P1 of the arm 33 and the distal end P2 of the hook 36 support the bracket 31 and the inflator 30 so that they do not fall off from the wall 19a of the inner panel 19. This temporarily fixes the inflator 30 to the wall 19a of the inner panel 19. A bolt 26 is then inserted through the hole 34 of each bracket 31 and fastened with the female screw 25 of the wall 19a. This fastens the bracket 31 to the wall 19a of the inner panel 19 together with the inflator 30.

In this embodiment, the inflator 30 is temporarily fixed to the wall 19a of the inner panel 19 when fixing the inflator 30 to the roof. In such a state, each bracket 31 is fastened to the wall 19a of the inner panel 19. Therefore, the bracket 31 does not need to be fastened while positioning the bracket 31 on the roof. This enables the inflator 30 to be easily attached to the roof of the vehicle 10.

Further, in a state in which the inflator 30 is temporarily fixed to the inner panel 19, tasks other than the fixing of the inflator 30 such as the fixing of the airbag 13 to the roof can easily be carried out.

In this embodiment, the brackets 31 are temporarily fixed to the wall 19a of the inner panel 19. The holding portion 32 of each bracket 31 holding the inflator 30 is tilted downward when temporarily fixing the bracket 31 to the roof. The downward tilting of the holding portion 32 in the bracket 31 causes a component force resulting from the weight of the inflator 30 and moves the bracket 31 forward.

In this embodiment, the distal end of the hook 36, which is used to temporarily fix the corresponding bracket 31 to the roof, is bent towards the inflator 30. Thus, a component force resulting from the weight of the inflator 30 engages the hook 36 of the bracket 31 with the hole 34 of the wall 19a. That is, this embodiment provides a structure that prevents the inflator 30 from falling off the roof when the inflator 30 is temporarily fixed to the roof. Such a structure simplifies the attachment of the inflator 30 to the roof.

This embodiment employs the two brackets 31, which are spaced from each other by a predetermined distance.
Further, each bracket 31 includes the hook 36. When fixing the inflator 30 to the wall 19a of the inner panel 19, the hook 36 of each bracket 31 is engaged with the corresponding engagement hole 24 of the wall 19a. Thus, the inflator 30 is temporarily fixed to the roof by the hooks 36 in a stable state.

The first embodiment has the advantages described below.
(1) The two brackets 31, each including the hook 36, are arranged on the inflator 30. The inflator 30 is temporarily fixed to the roof by engaging the hook 36 of each bracket 31 to the corresponding engagement hole 24 of the wall 19a. In such a state, the inflator 30 is fixed to the roof. That is, the bracket 31 does not have to be fastened while positioning the bracket 31 on the roof.
   Thus, the inflator 30 is easily attached to the roof of the vehicle 10.
(2) The two brackets 31 are spaced from each other by a predetermined distance. Thus, the hooks 36 of the brackets 31 are also spaced from each other by a predetermined distance. This temporarily fixes the inflator 30 to the roof with the hooks 36 in a stable state.

A second embodiment of an airbag device and inflator according to the present invention will now be discussed. The airbag device of the second embodiment differs from the airbag device of the first embodiment in the fastening structure for the inflator. The fastening structure for the inflator of this embodiment will now be described in detail. To avoid redundancy, like or same reference numerals are given to those components that are the same as the corresponding components of the first embodiment. Such components will not be described.

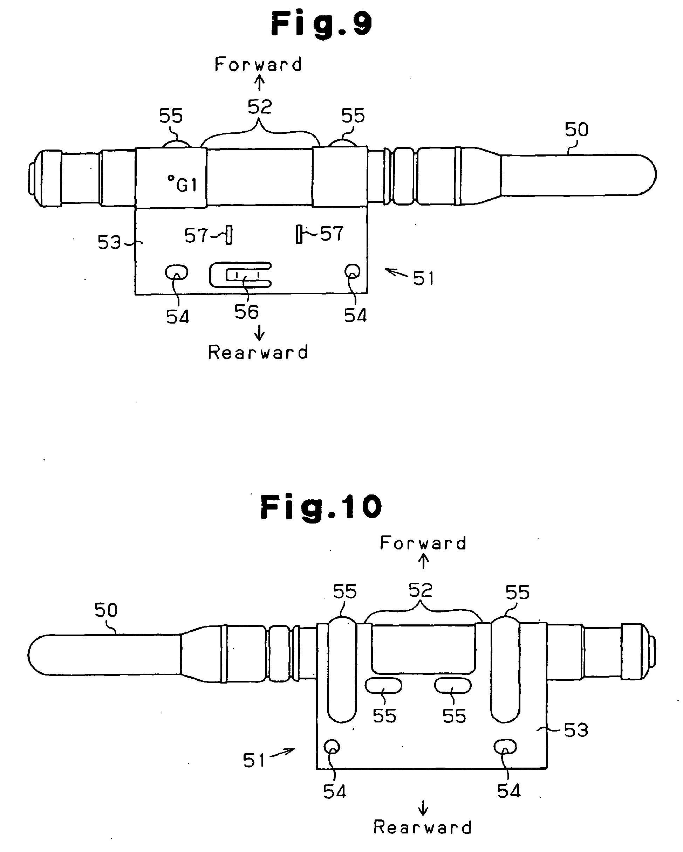

As shown in Figs. 8 to 10, an inflator 50 is cylindrical. A single bracket 51 is arranged on the inflator 50. In this embodiment, the bracket 51 is fastened to the roof, more specifically, to the lower surface of the wall 19a of the inner panel 19. This fixes the inflator 50 to the roof of the vehicle 10.

Two holding portions 52 are defined on the bracket 51. The inflator 50 is held in the two holding portions 52 of the bracket 51. The holding portions 52 each have a substantially C-shaped cross-section. The holding portions 52 each cover the circumferential surface of the inflator 50 and extend along the axis direction of the inflator 50.

The bracket 51 includes an arm 53 extending rearwards from the inflator 50. The arm 53 has a generally planar base.

Two holes 54 extend through the arm 53. The holes 54 are used when fixing the inflator 50 to the roof with the bracket 51. The arm 53 includes four projections 55 located on the side opposite to the wall 19a of the inner panel 19 shown in Fig. 3. The projection 55 is a rib for reinforcing the arm 53. Two of the four projections 55 linearly extend from the arm 53 to the holding portions 52 in a direction orthogonal to the axis of the inflator 30. Further, two protrusions 57 are formed on the upper surface of the arm 53. Each protrusion 57 contacts the wall 19a when the arm 53 is fastened to the wall 19a of the inner panel 19.

The arm 53 includes a hook 56, which is located between the rear end of the arm 53 that is spaced from the inflator 50 and the front end of the arm 53 that is proximal to the inflator 50. The hook 56 extends in a direction intersecting the axial direction of the arm 53. More specifically, the hook 56 extends from the upper surface of the arm 53 towards the wall 19a of the inner panel 19. Further, the hook 56 extends parallel to the outer wall of the inflator 50. In other words, the hook 56 extends along the axial direction of the inflator 50. The hook 56 has a distal end extending toward the center of gravity G1 of an assembly including the inflator 50 and the bracket 51.

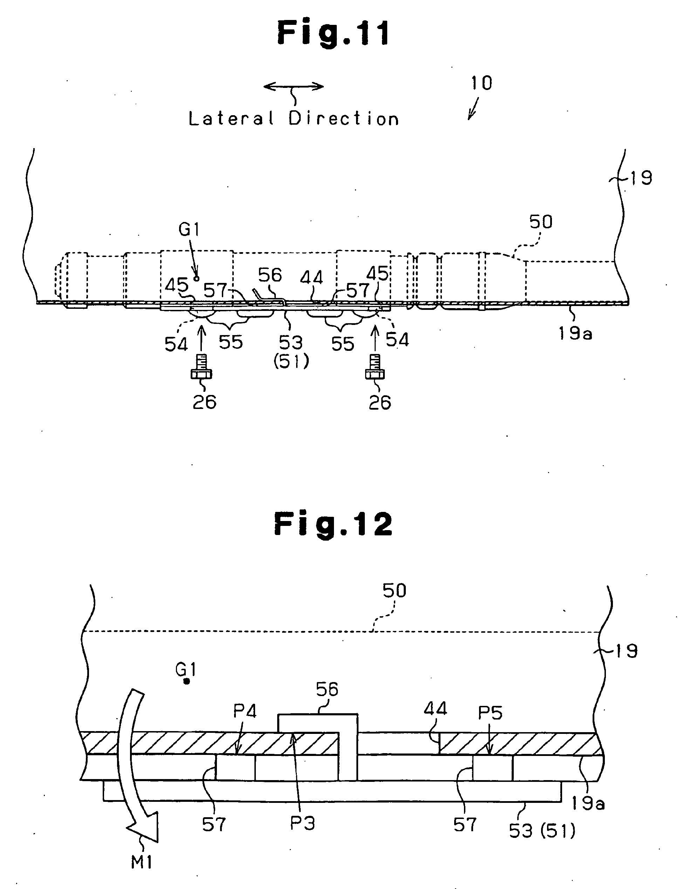

As shown in Fig. 11, the wall 19a of the inner panel 19 includes an engagement hole 44 formed at a position corresponding to the hook 56 of the bracket 51. A female screw 45 is formed at a position corresponding to each hole 54 of the bracket 51 in the wall 19a of the inner panel 19.

The operation of the airbag device and the inflator 50 of this embodiment will now be discussed.

As shown in Figs. 11 and 12, the hook 56 of the bracket 51 is first engaged with the engagement hole 44 of the wall 19a to fix the inflator 50 to the roof. This arranges the wall 19a of the inner panel 19 between an inner surface P3 of the hook 56 and end surfaces P4 and P5 of the protrusions 57. Thus, the bracket 51 is supported by the wall 19a of the inner panel 19 together with the inflator 50. In this manner, the inflator 50 is temporarily fixed to the wall 19a of the inner panel 19. A bolt 26 is inserted into each hole 54 of the bracket 51 and fastened with the corresponding female screw 45 in the wall 19a. This fastens the bracket 51 to the wall 19a of the inner panel 19 together with the inflator 50.

In this embodiment, the inflator 50 is temporarily fixed to the wall 19a of the inner panel 19 when fastening the inflator 50 to the roof. In this state, the bracket 51 can be fastened to the wall 19a of the inner panel 19. Therefore, the bracket 51 does not need to be fastened while positioning the bracket 51 on the roof. The inflator 50 can thus be easily attached to the roof of the vehicle 10.

Tasks other than the fixing of the inflator 50, such as the task of fixing the airbag 13 to the roof, can be easily carried out in a state in which the inflator 50 is temporarily fixed to the inner panel 19.

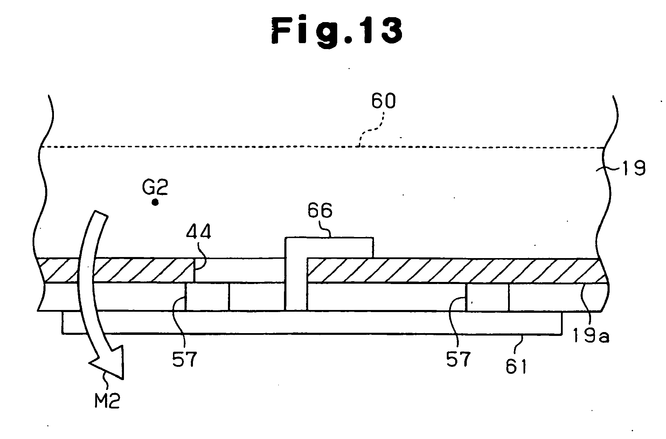

In this embodiment, the bracket 51 is temporarily fixed to the wall 19a of the inner panel 19. Fig. 13 shows a structure in which a hook 66 has a distal end bent away from the center of gravity G2 of an assembly including an inflator 60 and a bracket 61. In the structure shown in Fig. 13, when temporarily fixing the inflator 60 to the roof, the weight of the assembly tilts the assembly in the direction of the arrow M2 shown in Fig. 13 due to its own weight. Thus, the structure shown in Fig. 13 is a structure in which the hook 66 easily becomes disengaged from the engagement hole 44, and the inflator 60 easily falls off from the roof.

Comparatively, in this embodiment, the distal end of the hook 56 on the bracket 51 extends toward the center of gravity G1 of the assembly, as shown in Fig. 11 and Fig. 12. Thus, when the inflator 50 is temporarily fixed to the roof, the weight of the assembly tilts the assembly in a direction in which the hook 56 engages the engagement hole 44, that is, in the direction of the arrow M1 shown in Fig. 12. Therefore, the airbag device of this embodiment has a structure that prevents the inflator 50 from falling off from the roof when the inflator 50 is temporarily fixed to the roof. This simplifies the attachment of the inflator to the roof.

The present embodiment has the advantage described below.
(1) The bracket 51 including the hook 56 is arranged on the inflator 50. The inflator 50 is temporarily fixed to the roof by engaging the hook 56 of the bracket 51 with the engagement hole 44 in the wall 19a. In this state, the inflator 50 is fixed to the roof. Therefore, the bracket 51 does not need to be fastened while positioning the bracket 51 on the roof. The inflator 50 can thus be easily attached to the roof of the vehicle 10. Furthermore, the inflator 50 is prevented from falling off from the roof when the inflator 50 is temporarily fixed to the roof. This structure simplifies the attachment of the inflator 50 to the roof.

It should be apparent to those skilled in the art that the present invention may be embodied in many other specific forms without departing from the spirit or scope of the invention. Particularly, it should be understood that the present invention may be embodied in the following forms.

In the first embodiment, three or more brackets 31 may be arranged in the inflator 30.

In the first embodiment, the inflator 30 may be provided with only one bracket 31. In this case, it is preferable that a plurality of hooks be arranged on the bracket 31 to temporarily fix the inflator 30 in a stable state.

In the first embodiment, as long as the distal end of the hook extends toward the inflator 30, the hook may extend along a first straight line perpendicular to the axial line of the inflator 30 , a second straight line intersecting the first straight line, or a third straight line that is skew to the first straight line. It is only necessary the distal end of the hook be extended towards the center of gravity in the assembly of the inflator 30 and the bracket 31 to obtain the same effects as the first embodiment.

In the second embodiment, a plurality of brackets 51 may be arranged in the inflator 50.

In the second embodiment, the hook 56 does not have to extend straight along the axial direction of the inflator 50 as long as the hook 56 extends along the outer wall of the inflator 50. In such a case, it is only necessary that the distal end of the hook be extended towards the center of gravity in the assembly of the inflator 50 and the bracket 51 to obtain the same effects as the second embodiment.

In each embodiment, in addition to portion fastened to the wall 19a of the inner panel 19, each of the arms 33 and 53 may include a portion extending rearward from the inflators 30 and 50. Such a portion may have any cross-sectional shape and be circular or polygonal.

The present invention may be applied to a side curtain airbag device in which a folded airbag is accommodated in the roof, and the airbag is inflated and deployed between a seat and a side window. In other words, the present invention is applicable to an airbag device of a type in which the inflator is attached to the roof of the vehicle from the lower side.

The present examples and embodiments are to be considered as illustrative and not restrictive, and the invention is not to be limited to the details given herein, but may be modified within the scope and equivalence of the appended claims.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An inflator (50) for use in an airbag device including an airbag (13) adapted for being accommodated in a roof (11,12,19)of a vehicle (10) in a folded state, the roof (11, 12, 19) including a wall (19a) extending in a lateral direction and a longitudinal direction of the vehicle (10), and the inflator (50) being fixed to the wall (19a) of the roof (11, 12, 19) and generating gas for inflation of the airbag (13), the inflator (50) being **characterized by**:
a bracket (31; 51) adapted for fixing the inflator (50) to the roof (11, 12, 19), the bracket (51) including an arm (53), extendings in the longitudinal direction from the inflator (50) and a hook (56) arranged at an intermediate position in the longitudinal direction of the arm (53), wherein the hook (56) extends towards the wall (19a) of the roof (11, 12, 19) and has a distal end extending towards a center of gravity in an assembly of the bracket (51) and the inflator (50).

2. The inflator (50) according to claim 1, being **characterized in that** the hook (56) extends along an outer wall of the inflator (50).

3. An inflator (30) for use in an airbag device including an airbag (13) adapted for being accommodated in a roof (11, 12, 19) of a vehicle (10) in a folded state, the roof (11, 12, 19) including a wall (19a) extending in a lateral direction and a longitudinal direction of the vehicle (10), and the inflator (30) being adapted for being fixed to the wall (19a) of the roof (11, 12, 19) and for generating gas for inflation of the airbag (13), the inflator (30) being **characterized by**:
a bracket (31) adapted for fixing the inflator (30) to the roof (11, 12, 19), the bracket (31) including an arm (33) extendings in the longitudinal direction from the inflator (30) and a hook (36), arranged at an intermediate position in the longitudinal direction of the arm (33), wherein the hook (36) extends towards the wall (19a) of the roof (11, 12, 19) and has a distal end extending towards the inflator (30).

4. The inflator (30) according to claim 3, being **characterized in that** the hook (36) is one of a plurality of hooks (36) spaced apart by a predetermined distance.

5. The inflator (30) according to any one of claims 1 to 4, being **characterized in that** the arm (33) is formed to be entirely planar.

6. An airbag device including an airbag (13) adapted for being accommodated in a roof (11, 12, 19) of a vehicle (10) in a folded state, and an inflator (30; 50), according to one of claims 1 to 5, the roof (11, 12, 19) including a wall (19a) extending in a lateral direction and longitudinal direction of the vehicle (10); and including an engagement portion (24) which is engageable with the hook (36;56) of the inflator (30: 50) and the bracket (31; 51) of the inflator (30: 50) being fixed from below to the wall (19a) of the roof (11, 12, 19),

7. The airbag device according to claim 6, being **characterized in that** the airbag (13) is accommodated in a rear end of the roof (11, 12, 19) and is inflated and deployed between a rear seat (17) and a rear window (18) of the vehicle (10).

## Patentansprüche

1. Gasgenerator (50) zum Verwenden in einer Airbageinrichtung, die einen Airbag (13) enthält, der angepasst ist, in einem Dach (11, 12, 19) eines Fahrzeugs (10) in einem gefalteten Zustand untergebracht zu werden, wobei das Dach (11, 12, 19) eine Wand (19a) enthält, die sich in einer Querrichtung und einer Längsrichtung des Fahrzeugs (10) erstreckt, und der Gasgenerator (50) an der Wand (19a) des Daches (11, 12, 19) befestigt ist und Gas zum Aufblasen des Airbags (13) erzeugt, wobei der Gasgenerator (50) **gekennzeichnet ist durch**:
eine Klammer (51), die zum Befestigen des Gasgenerators (50) an dem Dach (11, 12, 19) angepasst ist, wobei die Klammer (51) einen Arm (53), der sich in der Längsrichtung von dem Gasgenerator (50) erstreckt, und einen Haken (56) enthält, der an einer Zwischenposition in der Längsrichtung des Arms (53) angeordnet ist, wobei der Haken (56) sich in Richtung der Wand (19a) des Daches (11, 12, 19) erstreckt und ein fernes Ende aufweist, das sich in Richtung eines Schwerpunkts in einem Zusammenbau der Klammer (51) und des Gasgenerators (50) erstreckt.

2. Gasgenerator (50) nach Anspruch 1, **dadurch gekennzeichnet, dass** der Haken (56) sich entlang einer Außenwand des Gasgenerators (50) erstreckt.

3. Gasgenerator (30) zum Verwenden in einer Airbageinrichtung, die einen Airbag (13) enthält, der angepasst ist, in einem Dach (11, 12, 19) eines Fahrzeugs (10) in einem gefalteten Zustand untergebracht zu werden, wobei das Dach (11, 12, 19) eine Wand (19a) enthält, die sich in einer Querrichtung und einer Längsrichtung des Fahrzeugs (10) erstreckt, und der Gasgenerator (30) an der Wand (19a) des Daches (11, 12, 19) befestigt ist und Gas zum Aufblasen des Airbags (13) erzeugt, wobei der Gasgenerator (30) **gekennzeichnet ist durch**:
eine Klammer (31), die zum Befestigen des Gasgenerators (30) an dem Dach angepasst ist, wobei die Klammer (31) einen Arm (33), der sich in der Längsrichtung von dem Gasgenerator (30) erstreckt, und einen Haken (36) enthält, der in einer Zwischenposition in der Längsrichtung des Arms (33) angeordnet ist, wobei der Haken (36) sich in Richtung der Wand (19a) des Daches (11, 12, 19) erstreckt und ein fernes Ende aufweist, das sich in Richtung des Gasgenerators (30) erstreckt.

4. Gasgenerator (30) nach Anspruch 3, **dadurch gekennzeichnet, dass** der Haken (36) einer aus mehreren Haken (36) ist, die voneinander in einem vorgegebenen Abstand beabstandet sind.

5. Gasgenerator (30; 50) nach einem der Ansprüche 1 bis 4, **dadurch gekennzeichnet, dass** der Arm (33, 53) derart ausgebildet ist, dass er vollkommen flach ist.

6. Airbageinrichtung mit einem Airbag (13), der angepasst ist, in einem Dach (11, 12, 19) eines Fahrzeugs (10) in einem gefalteten Zustand untergebracht zu werden, und einem Gasgenerator (30; 50) nach einem der Ansprüche 1 bis 5, wobei das Dach (11, 12, 19) eine Wand (19a) enthält, die sich in einer Querrichtung und einer Längsrichtung des Fahrzeugs (10) erstreckt und einen Eingriffsbereich (24) enthält, der mit dem Haken (36; 56) des Gasgenerators (30; 50) in Eingriff gebracht werden kann und die Klammer (31; 51) des Gasgenerators (30; 50) von unten an der Wand (19a) des Daches (11, 12, 19) befestigt wird.

7. Airbageinrichtung nach Anspruch 6, **dadurch gekennzeichnet, dass** der Airbag (13) in einem hinteren Ende des Dache (11, 12, 19) untergebracht wird und zwischen einem Rücksitz (17) und einer Heckscheibe (18) des Fahrzeugs (10) aufgeblasen und entfaltet wird.

## Revendications

1. Gonfleur (50) pour usage dans un dispositif à coussin d'air, comprenant un coussin d'air (13) qui est à même d'être reçu dans le toit (11, 12, 19) d'un véhicule (10) à l'état replié, le toit (11, 12, 19) comprenant une paroi (19a) s'étendant dans une direction latérale et dans une direction longitudinale du véhicule (10), et le gonfleur (50) étant fixé à la paroi (19a) du toit (11, 12, 19) et générant du gaz pour gonfler le coussin d'air (13), le gonfleur (50) étant **caractérisé par**
une potence (31 ; 51) qui est à même de fixer le gonfleur (50) au toit (11, 12, 19), la potence (51) comprenant un bras (53) qui s'étend dans la direction longitudinale depuis le gonfleur (50) et un crochet (56) aménagé en position intermédiaire dans la direction longitudinale du bras (53), dans lequel le crochet (56) s'étend vers la paroi (19a) du toit (11, 12, 19) et présente une extrémité distale s'étendant vers un centre de gravité dans un ensemble formé par la potence (51) et le gonfleur (50).

2. Gonfleur (50) selon la revendication 1, **caractérisé en ce que** le crochet (56) s'étend le long d'une paroi externe du gonfleur (50).

3. Gonfleur (30) pour usage dans un dispositif à coussin d'air, comprenant un coussin d'air (13) qui est à même d'être reçu dans le toit (11, 12, 19) d'un véhicule (10) à l'état replié, le toit (11, 12, 19) comprenant une paroi (19a) s'étendant dans une direction latérale et dans une direction longitudinale du véhicule (10), et le gonfleur (30) étant à même d'être fixé à la paroi (19a) du toit (11, 12, 19) et de générer du gaz pour gonfler le coussin d'air (13), le gonfleur (50) étant **caractérisé par**
une potence (31) qui est à même de fixer le gonfleur (30) au toit (11, 12, 19), la potence (31) comprenant un bras (33) qui s'étend dans la direction longitudinale depuis le gonfleur (30) et un crochet (36) aménagé en position intermédiaire dans la direction longitudinale du bras (33), dans lequel le crochet (36) s'étend vers la paroi (19a) du toit (11, 12, 19) et présente une extrémité distale s'étendant vers le gonfleur (30).

4. Gonfleur (30) selon la revendication 3, **caractérisé en ce que** le crochet (36) est l'un d'une pluralité de crochets (36) espacés les uns des autres d'une distance prédéterminée.

5. Gonfleur (30) selon l'une quelconque des revendications 1 à 4, **caractérisé en ce que** le bras (33) est formé de manière à être entièrement plan.

6. Dispositif à coussin d'air comprenant un coussin d'air (13) qui est à même d'être reçu dans un toit (11, 12, 19) d'un véhicule (10) à l'état replié, et un gonfleur (30 ; 50) selon l'une quelconque des revendications 1 à 5, le toit (11, 12, 19) comprenant une paroi (19a) s'étendant dans une direction latérale et dans une direction longitudinale du véhicule (10) ; et comprenant une portion d'engagement (24) qui peut s'engager sur le crochet (36 ; 56) du gonfleur (30 ; 50) et la potence (31 ; 51) du gonfleur (30 ; 50) étant fixée par en dessous à la paroi (19a) du toit (11, 12, 19).

7. Dispositif à coussin d'air selon la revendication 6, **caractérisé en ce que** le coussin d'air (13) est reçu dans une extrémité arrière du toit (11, 12, 19) et est gonflé et déployé entre un siège arrière (17) et une fenêtre arrière (18) du véhicule (10).
